# EUROPEAN PATENT APPLICATION

(11) **EP 1 724 122 A1**
(43) Date of publication of application: **22.11.2006**
(21) Application number: 05425328.1
(22) Date of filing: 16.05.2005
(51) Int. Cl.: B60B 1/00, B60B 1/04

(54) **Spoke for a bicycle wheel and bicycle wheel comprising such a spoke**

(71) Applicant: CAMPAGNOLO S.R.L., I-36100 Vicenza (IT)
(72) Inventor: Passarotto, Maurizio, 45100 Rovigo (IT)
(74) Representative: Castiglia, Paolo

(57) **Abstract**

A spoke (10) for a bicycle wheel is described, comprising an elongated body (20) extending along a longitudinal axis (X-X), said elongated body comprising a first end portion (30) for attachment to a hub of a bicycle wheel, a second end portion for attachment to a rim of the bicycle wheel and an intermediate portion (50) having a portion (60) flattened in a transversal direction (z) perpendicular to the longitudinal axis (X-X), wherein at least one of said first and second end portions of the elongated body (20) of the spoke (10) comprises a surface of revolution. In accordance with the invention, the surface of revolution comprises at least one discontinuity, such as a projection (70) or a recess. Such a discontinuity, preventing the rotation of the spoke about its axis X-X when mounted in the respective seat or opening formed on the hub and/or rim, ensures the correct positioning of the spoke with respect to the hub and/or rim in the assembly step of the spoke and that such a correct position is maintained during travel even following knocks or vibrations.

## Description

The present invention relates to a spoke for a bicycle wheel. The invention also relates to a bicycle wheel comprising such a spoke.

As known, spokes for a bicycle wheel comprise an elongated body, generally made from metal like steel or aluminium or alloys thereof, provided with a first end portion for attachment to the hub, which constitutes the central element of the bicycle wheel, and a second end portion for attachment to the rim, on which the tire is mounted. Typically, the end portion for attachment to the hub is shaped so as to define a head intended to be housed in suitable seats and/or openings formed in the hub; the end portion for attachment to the rim, on the other hand, typically has a threaded zone to allow the attachment to the rim and the adjustment of the tension of the spoke through the help of a suitable nut or nipple.

In order to enhance the aesthetics appearance and the sports performance of the wheels, as well as the safety and comfort of the cyclist, flattened spokes have been proposed, i.e. spokes having a flattened body portion between the two end portions for attachment to the hub and to the rim. The flattened spokes, if correctly orientated when mounted onto the hub and rim, give the wheel an original aesthetic appearance and allow the visibility and aerodynamics of the wheel itself to be increased, at the same time reducing its noisiness during travel.

A first example of a flattened spoke is disclosed in EP 0 794 071. In particular, this is a spoke consisting of a substantially cylindrical wire-shaped element having a frusto-conical head for attachment to the hub, a threaded end for attachment to the rim and a cylindrical intermediate portion having a flattened zone at the crossing zones of the spokes when mounted on the wheel. The head for attachment to the hub is intended to be housed in a seat formed on the side surface of the hub; such a seat is open at the front surface of the hub.

The Applicant has found that the spoke disclosed in the aforementioned patent has the drawback that the coupling between head for attachment to the hub and respective seat is such that, once the first detachment friction is overcome, the head for attachment to the hub can freely rotate in the respective seat about the longitudinal axis of the spoke. Such a rotation can take place during travel following knocks or vibrations and involves a displacement of the flattened zone of the spoke from its correct position, thus causing a deterioration of the aerodynamic performance of the wheel during travel, as well as increased noisiness thereof. In such a circumstance, the visibility and aesthetics appearance of the wheel is also compromised.

The Applicant also observes that, with a spoke of the type described in the aforementioned patent, it is necessary to pay particular attention during the assembly and/or tensioning operations of the spoke to avoid accidentally orientating the flattened zone of the spoke incorrectly. Indeed, the coupling between head of the spoke and respective seat formed in the hub has a degree of freedom in the direction of rotation about the longitudinal axis of the spoke. The achievement of the desired position for the flattened portion of the spoke is therefore left exclusively to the capability and care of the operator who assembles the spoke.

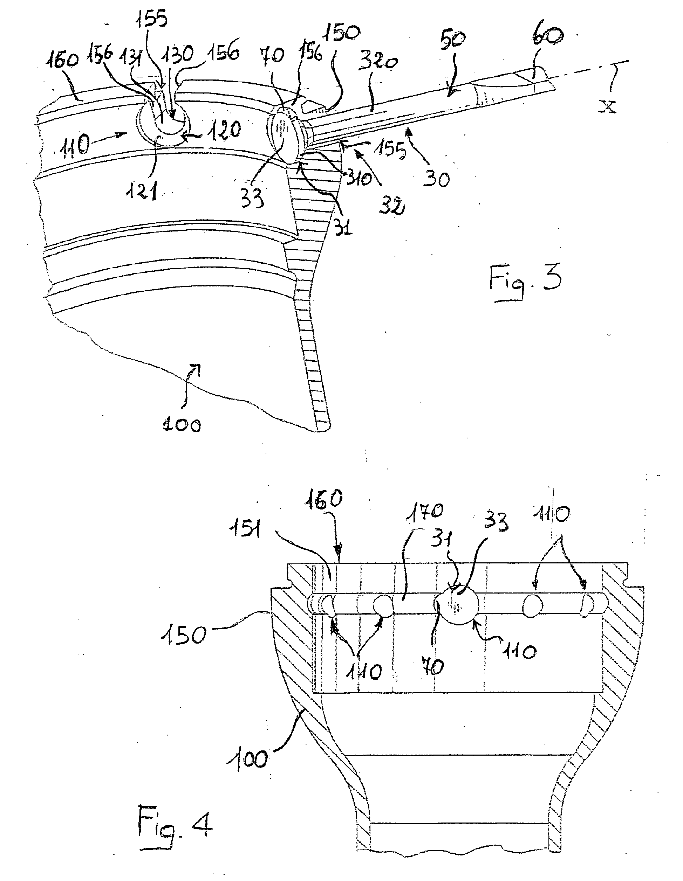

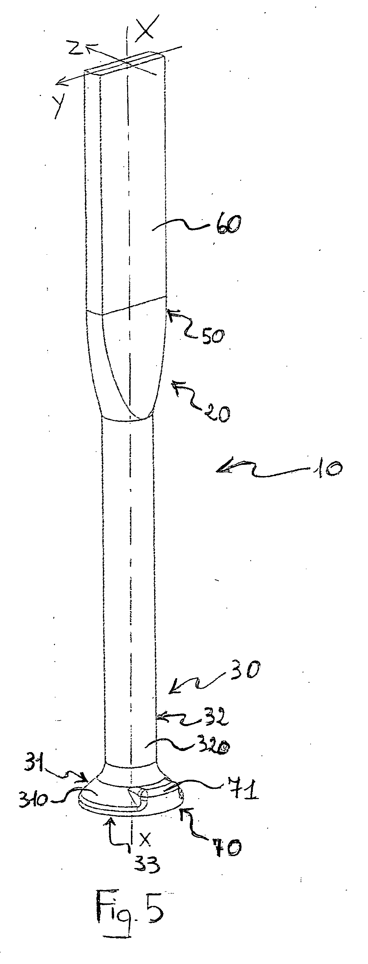

A second example of a flattened spoke made from metal is disclosed in US 6,189,978. In particular, this is a spoke comprising a pair of opposite widened heads for attachment to the hub and to the rim of the wheel respectively, and a flattened intermediate portion. The head for attachment to the hub has a non-circular cross section, in particular a quadrangular cross section. In the embodiment illustrated in figure 5, the spoke is associated with the hub at a respective opening formed on the side surface of the hub. In particular, the head for attachment to the hub is positioned inside the hub and with its upper surface in abutment against the inner side surface of the hub. The contact between the inner surface of the hub and the edges of the head for attachment to the hub of the spoke prevents the rotation of the spoke about its longitudinal axis during tensioning.

The Applicant observes that, with a spoke of the type described above, the rotation of the spoke about its axis when mounted on the hub is prevented until a minimum tensioning level of the spoke is ensured, such that the head for attachment to the hub remains in abutment against the inner side surface of the hub. However, it could happen that, owing to knocks or vibrations during travel, the rim is subjected to an elastic deformation of a degree such as to cause a loss of tensioning and the consequent detachment of the head for attachment to the hub from the inner side surface of the hub itself. In such a situation, the head for attachment to the hub can freely rotate with respect to the hub, with consequent displacement of the flattened zone of the spoke from its correct position.

The Applicant also observes that, with a spoke of the type disclosed in the aforementioned patent, since the upper surface of the head for attachment to the hub is flat (i.e. widened in the plane transversal to the longitudinal axis of the spoke and squashed along such a longitudinal axis) and the inner side surface of the hub is curved, the contact between head of the spoke and hub takes place over a small area, with consequent concentration of tensions in an area that is particularly important for the torque transmission between hub and wheel. Moreover, in the assembly steps of the spoke on the hub, the centring of the flat head in the respective opening formed on the cylindrical side surface of the hub is not immediate, with consequent generation of further tensions.

The Applicant has also found that the particular flattened configuration of the head for attachment to the hub makes the spoke disclosed in the aforementioned patent not very suitable for achieving a stable coupling with most conventional hubs, such as the one illustrated in patent EP 0 794 071 quoted above. Therefore, such a solution is not very desirable for most users and/or operators, precisely due to the limited possibility of combination and interchangeability with conventional hubs.

The Applicant has thus considered the problem of manufacturing a flattened spoke that has a configuration such as to prevent the rotation of the spoke about its longitudinal axis during travel (also under conditions of loss of tensioning) and during the assembly and/or tensioning steps of the spoke, at least partially overcoming the drawbacks aforementioned with reference to the spokes of the prior art.

The present invention therefore relates, in a first aspect thereof, to a spoke for a bicycle wheel, comprising an elongated body extending along a longitudinal axis X-X, said elongated body comprising:
- a first end portion for attachment to a hub of a bicycle wheel;
- a second end portion for attachment to a rim of a bicycle wheel;
- an intermediate portion between said first and second end portions, wherein said intermediate portion comprises a portion flattened in a direction z perpendicular to said longitudinal axis X-X;
wherein at least one of said first and second end portions comprises a surface of revolution;
characterised in that said surface of revolution comprises at least one discontinuity.

Throughout the present description and the subsequent claims, the expression: flattened portion, used with reference to the intermediate portion, is used to indicate a portion that has been squashed along the transversal direction z so that the cross section of such a portion is of a size (typically defining the thickness of the spoke portion in question) substantially smaller than the other dimension (typically defining the width of the spoke portion in question). Therefore, the opposite faces of said spoke portion do not necessarily have to be perfectly flat and parallel; i.e. one can also consider the possibility that such faces have a substantially elliptical or circular progression with a wide bending radius.

Throughout the present description and the subsequent claims, the expression: surface of revolution, is used to indicate a curved surface having symmetry about an axis and such as to allow a rotation about such an axis when said surface is in abutment with a corresponding coupling surface of another body. For example, a surface of revolution can be cylindrical, spherical, parabolic, toroidal, concave, convex, etc..

Advantageously, the spoke of the present invention, as well as having all of the advantageous features of good aerodynamics, quietness, nice appearance and visibility (and therefore safety and comfort for the cyclist) typical of flattened spokes, has special means adapted to prevent the rotation of the spoke about its longitudinal axis during travel and during the assembly and/or tensioning steps of the spoke itself on the hub and/or rim. Such means consist, in particular, of a discontinuity and/or irregularity of the surface of revolution of at least one of its end portions. Such a discontinuity defines an univocal coupling position between spoke and hub, thus preventing the relative rotation of the spoke with respect to the hub and/or rim. In particular, the rotation of the spoke about its longitudinal axis is prevented by the abutment action of the aforementioned discontinuity against a proper abutment surface defined on the hub and/or rim at the seat and/or opening for housing the head for attachment to the hub and/or rim of the spoke. Therefore, the correct orientation of the flattened portion of the spoke is ensured in the assembly step of the wheel and it is ensured that such correct orientation is maintained during travel, even following knocks or vibrations and/or under untensioning conditions that involve a loss of abutment between the head of the spoke and the respective seat formed in the hub and/or rim.

The spoke of the present invention, moreover, since it simply requires the presence of a discontinuity on the surface of revolution of its end portion, is suitable for being associated both with conventional hubs in which the seats are formed on the side surface and are open at the front and with conventional hubs in which the seats are formed on the side surface and are closed at the front. At most, it may be necessary to intervene on the hub at the seats to make the abutment surface for the discontinuity of the surface of revolution of the end portion of the spoke; however, this is a limited and inexpensive intervention that does not alter the original functionality of the hub.

A particularly advantageous aspect of the spoke of the present invention is the possibility of obtaining the aforementioned spoke without adding steps to the conventional production process of spokes (which typically comprises a moulding or upsetting process). Indeed, it is sufficient, for example, to modify the mould for the manufacturing of the head shaping it so as to obtained the desired discontinuity. The cost of manufacturing the spoke of the present invention is therefore relatively low.

For the sake of simplicity, throughout the present description reference shall often be made to the coupling between spoke and hub. The man skilled in the art shall, however, understand that what has been said shall have analogous application to the coupling between spoke and rim in those cases in which the tensioning of the spoke should take place at the hub.

Preferably, said at least one of said first and second end portions comprises a head for attachment to the hub and/or rim and an elongated body portion adjacent to said head for attachment to the hub and/or rim.

In accordance with a first embodiment of the spoke of the present invention, the surface of revolution is defined on the head for attachment to the hub and/or rim. In such a case, preferably, the surface of revolution is a frusto-conical surface.

In accordance with a second embodiment of the spoke of the present invention, the surface of revolution is defined on the elongated body portion adjacent to the head for attachment to the hub and/or rim. In such a case, preferably, the surface of revolution is a cylindrical surface.

In accordance with a third embodiment of the spoke of the present invention, the surface of revolution is defined both on the head for attachment to the hub and/or rim and on the elongated body portion adjacent to the head for attachment to the hub and/or rim. In such a case, the discontinuity can extend at least partially on said head for attachment to the hub and/or rim and on said elongated body portion adjacent to said head for attachment to the hub and/or rim.

In a first version of the spoke of the present invention, said at least one discontinuity comprises at least one projection. Such a projection can be integrally formed on said surface of revolution or can be defined on an element distinct from and associated with said surface of revolution. Advantageously, the manufacturing of the projection in a single piece with the surface of revolution of the end portion of the spoke simply requires a modification of the mould used to manufacture the aforementioned end portion, without any particular worsening of costs and times with respect to a conventional process. The manufacturing of the projection on an element distinct from the end portion of the spoke, on the other hand, does not require any modification of the mould, but requires an intervention on the spoke downstream of the process for manufacturing it.

Irrespective of the specific way of manufacturing of the projection, the projection is intended to couple with a throat or groove made at the seats provided in the hub and/or rim for housing the heads for attachment to the hub and/or rim of the spokes.

In a second version of the spoke of the present invention, said at least one discontinuity comprises at least one recess. In such a case, the recess is intended to couple with a projection at the seats provided in the hub and/or rim for housing the heads for attachment to the hub and/or rim of the spokes.

In a third version of the spoke of the present invention, said at least one discontinuity is defined by a substantially flat surface intended to couple in abutment with a corresponding substantially flat surface made in the seats formed in the hub and/or rim.

In a preferred embodiment of the spoke of the present invention, said at least one discontinuity extends along a direction substantially perpendicular to said longitudinal axis X-X and more preferably symmetrically with respect to a plane passing through said longitudinal axis X-X.

Preferably, said at least one discontinuity extends along said direction z or along a direction substantially perpendicular to said direction z.

In a variant of the spoke of the present invention, said at least one discontinuity can extend from said at least one of said first and second end portions along a direction parallel to said longitudinal axis X-X. Preferably, such a discontinuity is a projection that extends from the head for attachment to the hub towards the elongated body of the spoke. Alternatively, the projection extends from the base of the head for attachment to the hub on the opposite side to the elongated body of the spoke. In this last embodiment, the relative rotation between spoke and hub is prevented if the inclination with which the spokes are mounted on the hub with respect to the middle plane of the wheel is such as to take the aforementioned projection into abutment against a corresponding abutment surface of the hub or, in the case of spokes that are not inclined, if a suitable abutment surface is made at the end flange of the hub.

In the preferred embodiment of the spoke of the present invention, the surface of.revolution comprises at least two discontinuities; for example, preferably, four discontinuities. More preferably, such discontinuities extend symmetrically with respect to said longitudinal axis X-X.

Preferably, said at least one discontinuity comprises a curved outer surface. Advantageously, such a curved outer surface is intended to couple in abutment with a corresponding curved surface made in the seats formed on the hub, thus ensuring the automatic and immediate centring of the head in the respective seat both in the assembly step and following displacements caused during travel by knocks or vibrations.

In accordance with the present invention, the surface of revolution can be defined on said first end portion or on said second end portion.

In a further embodiment of the spoke of the present invention, such a spoke also comprises a bush having an outer surface for connection to the hub and/or rim and an inner surface for coupling with said at least one of said first and second end portions, wherein said inner surface is of a shape at least partially matching that of said surface of revolution.

Preferably, said outer surface comprises a threading for attachment to the hub and/or rim.

In a second aspect thereof, the present invention relates to a bicycle wheel, comprising:
- a hub;
- a rim;
- a plurality of spokes extending between said hub and said rim;
wherein the spokes of said plurality of spokes comprise an elongated body extending along a longitudinal axis X-X, said elongated body comprising:
- a first end portion for attachment to a hub of a bicycle wheel;
- a second end portion for attachment to a rim of a bicycle wheel;
- an intermediate portion between said first and second end portions, wherein said intermediate portion comprises a portion flattened in a direction z perpendicular to said longitudinal axis X-X;
wherein at least one of said first and second end portions comprises a surface of revolution;
characterised in that said surface of revolution comprises at least one discontinuity.

Preferably, the spokes of the aforementioned wheel comprise all of the technical and advantageous characteristics discussed above with reference to the spoke of the present invention. In the wheel of the present invention all of the aforementioned advantages are thus achieved.

Preferably, at least one of said hub and said rim comprises a coupling surface with said at least one discontinuity.

More preferably, said coupling surface is at least partially of a shape matching that of said at least one discontinuity.

In a third aspect thereof, the present invention relates to a spoke for a bicycle wheel, comprising an elongated body extending along a longitudinal axis X-X, said spoke comprising:
- a first end portion for attachment to a hub of a bicycle wheel;
- a second end portion for attachment to a rim of a bicycle wheel;
- an intermediate portion between said first and second end portions, wherein said intermediate portion comprises a portion flattened in a direction z perpendicular to said longitudinal axis X-X;
wherein at least one of said first and second end portions comprises a surface of revolution;
characterised in that said surface of revolution comprises at least one discontinuity.

Preferably, the surface of revolution is defined on an element distinct from said elongated body and associated with said elongated body at at least one of said first and second end portions.

Such a spoke can have all of the preferred and/or optional characteristics described above with reference to the embodiment of the spoke of the present invention in which the surface of revolution is made directly on the end portion of the elongated body.

Further characteristics and advantages of the present invention shall become clearer from the following detailed description of a preferred embodiment thereof, made with reference to the attached drawings. In such drawings:
- figure 1 is a schematic perspective view of a portion of a first embodiment of a spoke in accordance with the present invention;
- figure 2 is a schematic perspective view of a portion of a second embodiment of a spoke in accordance with the present invention;
- figure 3 is a schematic perspective view of the spoke of figure 2 associated at a front surface of a first embodiment of a hub for a bicycle wheel;
- figure 4 is a schematic sectional view of the spoke of figure 2 associated at a side surface of a second embodiment of a hub for a bicycle wheel;
- figure 5 is a schematic perspective view of a portion of a third embodiment of a spoke in accordance with the present invention;
- figure 6 is a schematic perspective view of a portion of a fourth embodiment of a spoke in accordance with the present invention associated with the hub of figure 2;
- figure 7 is a schematic perspective view of a portion of a fifth embodiment of a spoke in accordance with the present invention;
- figure 8 is a schematic perspective view of a portion of a sixth embodiment of a spoke in accordance with the present invention;
- figure 9 is a schematic perspective view of a portion of a seventh embodiment of a spoke in accordance with the present invention;
- figure 10 is a schematic perspective view of a portion of an eighth embodiment of a spoke in accordance with the present invention;
- figure 11 is a schematic perspective view of a portion of a ninth embodiment of a spoke in accordance with the present invention;
- figure 12 is a schematic perspective view of a tenth embodiment of a spoke in accordance with the present invention;

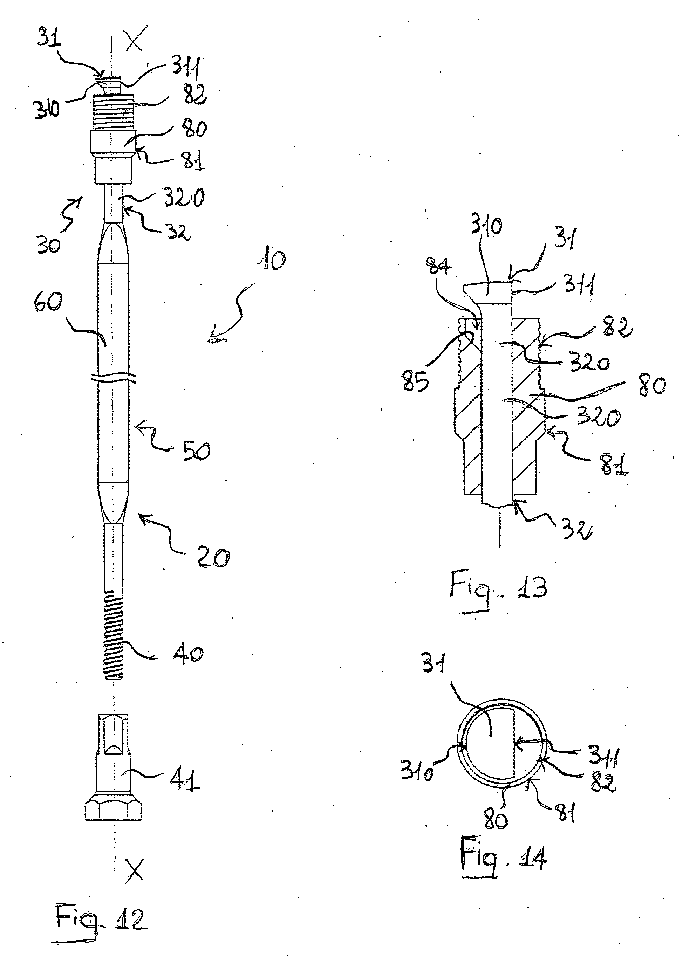

- figure 13 is an enlarged sectional view of a detail of the spoke of figure 12;
- figure 14 is an enlarged upper view of the spoke of figure 12.

In the attached figures, a spoke for bicycle wheels in accordance with the present invention is indicated with 10. The spoke 10 comprises an elongated body 20, preferably made from metal like steel or aluminium or alloys thereof (for example aluminium alloy) extending along a longitudinal axis X-X. Such a type of spoke is intended to be used in a bicycle wheel to connect a hub 100 (illustrated in figures 3 and 4) to a rim (not illustrated).

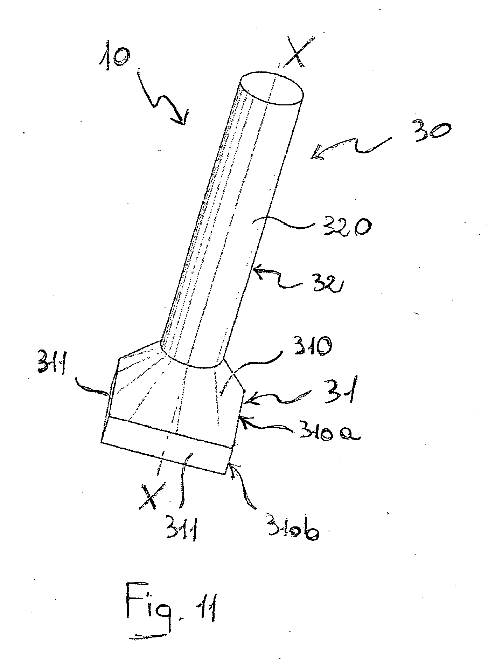

The body 20 of the spoke 10 of the present invention comprises a first end portion 30 for attachment to the hub, a second end portion 40, typically threaded, defining a zone for attachment to the rim (illustrated only in figure 12) through a tensioning nipple 41 and an intermediate portion 50. Such an intermediate portion 50 in turn comprises a portion 60 flattened in a transversal direction z perpendicular to the longitudinal axis X-X of the spoke 10.

The portion for attachment to the hub 30 comprises, in particular, an end portion defining a head 31 for attachment to the hub and a body portion 32 adjacent to the head 31 for attachment to the hub.

The head 31 comprises a substantially frusto-conical surface of revolution 310 that extends from a base surface 33 (clearly indicated in figures 3 and 4) up to the body portion 32.

The body portion 32 adjacent to the head 31 is defined by a substantially cylindrical surface of revolution 320 that extends up to the flattened portion 60.

In accordance with the present invention, the surface of revolution 310 of the head 31 for attachment to the hub and/or the surface of revolution 320 of the body portion 32 adjacent to the head 31 comprises a discontinuity adapted to prevent the rotation of the spoke 10 about its longitudinal axis X-X both during travel and during the assembly and/or tensioning steps of the spoke itself, as shall be described more clearly hereafter.

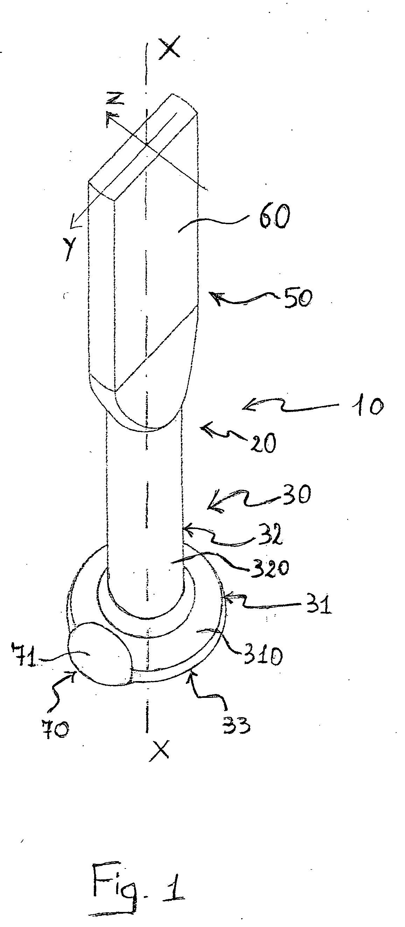

In the embodiment of the spoke of the present invention illustrated in figure 1, the aforementioned discontinuity is defined by a projection 70 that extends along a direction y substantially perpendicular to the direction z. In particular, the projection 70 is integrally formed on the surface of revolution 310 of the head 31 for attachment to the hub and comprises a curved outer surface 71 (for example a spherical or cylindrical convex surface).

In an alternative embodiment that is not illustrated, the projection 70 is defined on an element distinct from and associated with the surface of revolution 310 of the head 31 of the spoke 10.

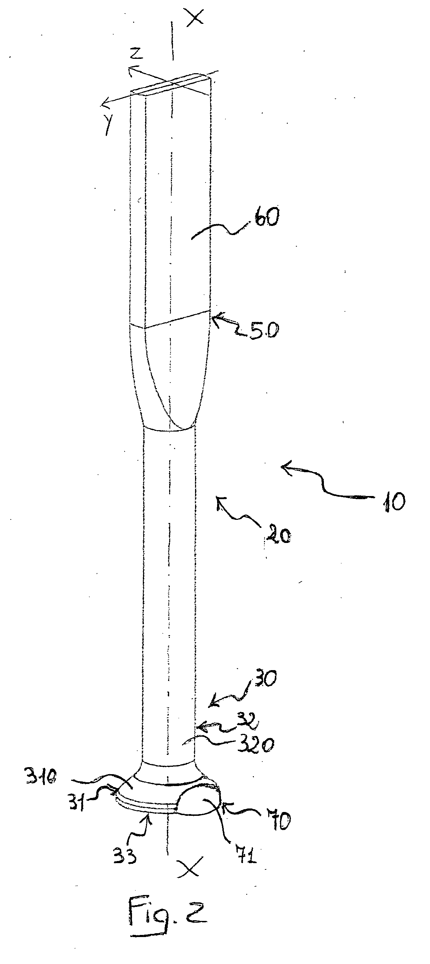

Figure 2 shows an alternative embodiment of the spoke of the present invention. Such an embodiment differs from the one illustrated in figure 1 described above solely for the reason that the projection 70 extends from the surface of revolution 310 of the head 31 of the spoke 10 along the direction z. However, it is possible to foresee further embodiments in which the projection 70 extends along a direction different to the directions y and z.

As illustrated in figures 3 and 4, the spoke 10 of the present invention is intended to be mounted on the hub 100 at respective housing seats 110 formed on the hub 100.

In the embodiment of the hub 100 illustrated in figure 3, the seats 110 are formed on a side surface 150 of the hub 100 and have respective openings 155 on the front surface 160 of the hub 100. Such openings 155 are defined by opposite substantially flat side surfaces 156.

In the embodiment illustrated in figure 4, the seats 110 are formed on the side surface 160 of the hub 100 and are closed at the front thereof.

The seats 110 comprise a first housing portion 120 for the head 31 of the spoke 10 and a second housing portion 130 for the spoke body portion 32 adjacent to the head 31 (see figure 3). The first housing portion 120 of the seat 110 comprises a convex surface 121 of a shape matching that of the surface of revolution 310 of the head 31 of the spoke 10. In the same way, the second housing portion 130 comprises a surface 131 of a shape matching that of the surface of revolution 320 of the body portion 32 adjacent to the head 31 of the spoke 10.

With reference to the embodiment of the hub 100 illustrated in figure 3, the spoke 10 is mounted in the seats 110 of the hub 100 inserting it through the openings 155 formed on the front surface 160 of the hub 100 and is positioned in such a way that, once tensioned, the surface of revolution 310 of the head 31 is in abutment against the surface 121 of the first housing portion 120 of the seat 110 and the projection 70 is at least partially housed in the front opening 155 of the seat. The rotation of the spoke 10 about its longitudinal axis X-X is prevented by the abutment action of the projection 70 against the walls 156 that define the opening 155.

In the embodiment of the hub 100 illustrated in figure 4, the spoke 10 is mounted in the seats 110 of the hub 100 making it run through the seats 110. Also in this case, the spoke 10 is positioned in such a way that, once tensioned, the surface of revolution 310 of the head 31 is in abutment against the surface 121 of the first housing portion 120 of the seat 110. In this case, however, the projection 70 is housed in a throat or groove 170 formed circumferentially on the inner side surface 151 of the hub 100 at the seats 110. The rotation of the spoke 10 about its longitudinal axis X-X is thus prevented by the abutment action of the projection 70 against the inner side surface 151 of the hub at the throat or groove 170.

In an alternative embodiment (not illustrated) of the hub of figure 4, each seat 110 comprises a respective throat for housing the projection 70.

Further alternative embodiments of the spoke of the present invention are illustrated in figures 5 to 11. The man skilled in the art shall, however, understand that it is possible to imagine and manufacture different embodiments to those illustrated and/or described here still applying the same inventive concept, which is that of providing a discontinuity or irregularity on the surface of revolution of the end portion of the spoke in question such as to interrupt the symmetry of revolution of such a surface. The man skilled in the art shall also be able to evaluate, according to the specific embodiment of the' spoke considered, whether and what possible modifications it is necessary to make to the hub so as to make it suitable for coupling with the spoke under consideration.

The embodiment illustrated in figure 5 differs from the one illustrated in figure 2 for the sole reason that the projection 70 extends from the surface of revolution 310 of the head 31 of the spoke 10 along a direction substantially parallel to the longitudinal axis X-X of the spoke 10 towards the elongated body 20 and does not project in the plane y-z perpendicular to such an axis X-X. Also in this case, the surface 71 of the projection is preferably curved and convex (for example spherical or cylindrical).

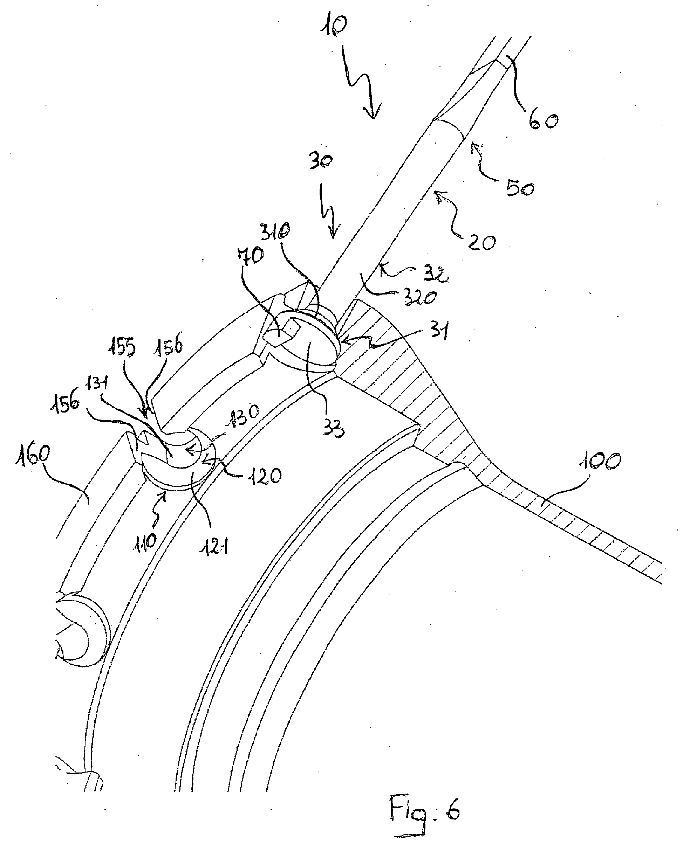

In an alternative embodiment, illustrated in figure 6, the projection 70 extends from the base 33 of the head 31 on the opposite side to the elongated.body 20.

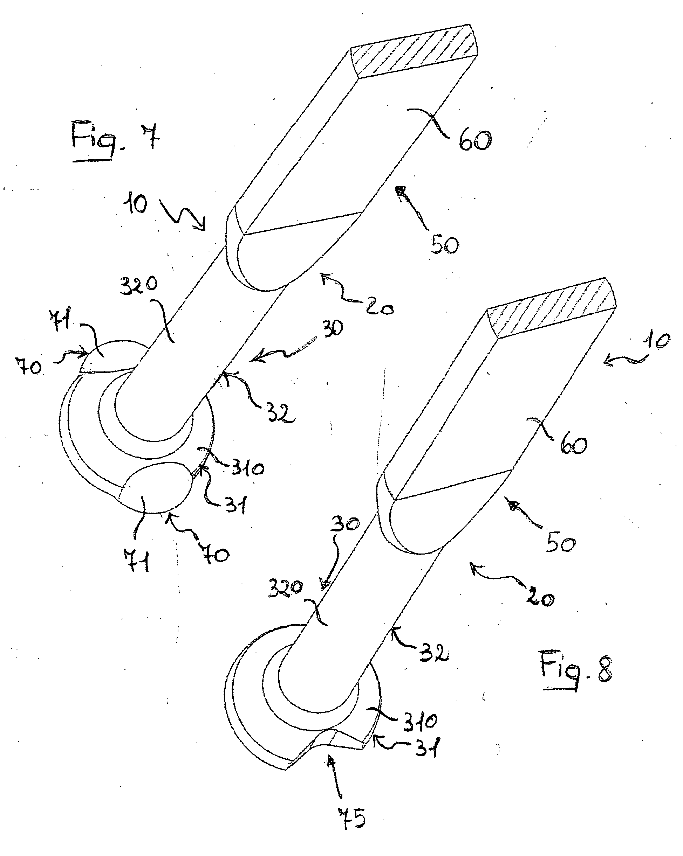

The embodiment illustrated in figure 7 differs from the one illustrated in figure 2 for the sole reason that it comprises two projections 71 arranged symmetrically with respect to the longitudinal axis X-X of the spoke 10.

The embodiment illustrated in figure 8 differs from the one illustrated in figure 2 for the sole reason that the discontinuity, instead of being defined by a projection, is defined by a recess 75 in the surface of revolution 310 of the head 31 of the spoke 10. Such a recess 75 is intended to couple with a projection (not illustrated) suitably made in the hub at the seats 110. Such a projection can, for example, have the shape of a small tooth projecting from the side surface of the seat 110.

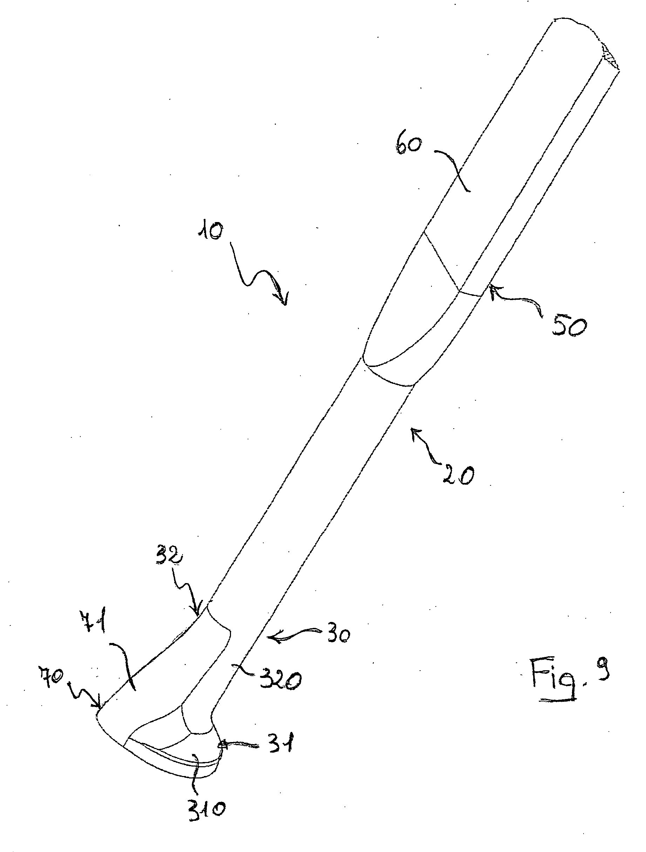

The embodiment illustrated in figure 9 differs from the one illustrated in figure 2 in that the projection 71 extends, as well as on the head 31 of the spoke 10, also on part of the body portion 32 adjacent to the head 31.

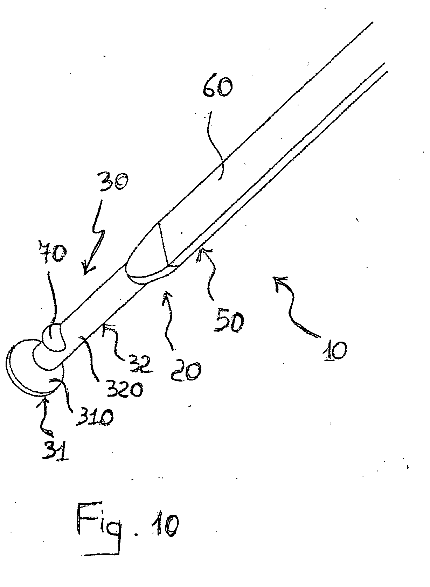

The embodiment illustrated in figure 10 differs from the one illustrated in figure 1 in that the projection 70 is defined on the surface of revolution 320 of the body portion 32 adjacent to the head 31 of the spoke 10.

In an alternative embodiment, the discontinuity on the surface of revolution 310 of the head 31 (or on the surface of revolution 320 of the body portion 32 adjacent to the head 31) is defined by a substantially flat surface intended to couple in abutment with a corresponding substantially flat surface made in the seats and/or openings formed in the hub and/or rim. An example of a spoke made in accordance with such an alternative embodiment is illustrated in figure 11. The spoke 10 of figure 11 comprises a head 31 having a frusto-conical surface 310 defined by a substantially conical upper portion 310a and a substantially quadrangular lower portion 310b. The lower portion 310b is obtained by making, on the lower portion of the surface 310, four facets-defining four flat surfaces 311 each arranged perpendicular to the adjacent surface. The embodiment illustrated in figure 12 differs from those described above in that the spoke 10 comprises, at its end portion for attachment to the hub 30, a bush 80 having, at an outer surface 81 thereof, means for connection to the hub (for example a threading 82). In the illustrated example, the above discontinuity is defined on the head 31 of the spoke 10 by making on such a head a flat surface 311 extending parallel to the longitudinal axis X-X substantially flush with the side surface 320 of the body portion 32 adjacent to the head 31 of the spoke 10.

The bush 80 is fitted onto the body portion 32 of the spoke 10 and comprises a longitudinal hole 84 defined by an inner surface 85 of the bush 80 of a shape matching that of the end portion 30 of the spoke 10.

In use, the head 31 of the spoke 10 of figure 10 is inserted into the bush 80 until the head 31 is taken into abutment against the inner surface 85 of the bush 80. The spoke 10 is then associated with the hub 100 by screwing the threading 82 into a corresponding threading made on the respective housing seat 110 formed on the hub 100. Conventional unscrewing-prevention devices prevent the rotation of the spoke with respect to the hub. The rotation of the spoke about its longitudinal axis X-X is prevented by the coupling between the flat surface 311 of the head 31 of the spoke and the inner surface 85 of the bush 80.

In a not illustrated variant of the spoke of the present invention, the aforementioned surface of revolution, instead of being made directly on the end portion of the elongated body 20 of the spoke 10 (like in the embodiments described above and illustrated in the attached drawings), is made on an element distinct from the elongated body 20, such a distinct element being associated (through totally conventional means) with the elongated body 20 at an end portion of the latter. For example, in a specific embodiment of such a variant spoke, the surface of revolution is defined on an end portion of a nut; such a nut has, at the opposite end thereof, a threading intended to engage with a corresponding threading formed on the end portion of the elongated body 20.

In use, the nut is screwed onto the elongated spoke body to make the spoke of the present invention. Such a spoke is then positioned on the hub according to the aforementioned teachings.

What has been stated above with reference to the coupling between spoke and hub is applicable to the coupling between spoke and rim. In such a case, the tensioning of the spoke shall take place at the hub.

## Claims

1. Spoke (10) for a bicycle wheel, comprising an elongated body (20) extending along a longitudinal axis X-X, said elongated body (20) comprising:
- a first end portion (30) for attachment to a hub (100) of a bicycle wheel;
- a second end portion (40) for attachment to a rim of a bicycle wheel;
- an intermediate portion (50) between said first and second end portions, wherein said intermediate portion (50) comprises a portion (60) flattened in a direction (z) perpendicular to said longitudinal axis (X-X);
wherein at least one of said first and second end portions (30, 40) comprises a surface of revolution (310, 320); **characterised in that** said surface of revolution (310, 320) comprises at least one discontinuity (70, 75, 311).

2. Spoke (10) according to claim 1, wherein said at least one of said first and second end portions (30, 40) comprises a head (31) for attachment to the hub (100) and/or rim and an elongated body portion (32) adjacent to said head (31) for attachment to the hub (100) and/or rim, wherein said surface of revolution (310, 320) is defined on said head (31) for attachment to the hub and/or rim.

3. Spoke (10) according to claim 2, wherein said surface of revolution (310, 320) is a frusto-conical surface.

4. Spoke (10) according to claim 1, wherein said at least one of said first and second end portions (30, 40) comprises a head (31) for attachment to the hub (100) and/or rim and an elongated body portion (32) adjacent to said head (31) for attachment to the hub (100) and/or rim, wherein said surface of revolution (310, 320) is defined on said elongated body portion (32) adjacent to said head (31) for attachment to the hub (100) and/or rim.

5. Spoke (10) according to claim 4, wherein said surface of revolution (310, 320) is a cylindrical surface.

6. Spoke (10) according to claim 1, wherein said at least one of said first and second end portions (30, 40) comprises a head (31) for attachment to the hub (100) and/or rim and an elongated body portion (32) adjacent to said head (31) for attachment to the hub (100) and/or rim, wherein said at least one discontinuity (70, 75, 311) extends at least partially on said head (31) for attachment to the hub (100) and/or rim and on said elongated body portion (32) adjacent to said head (31) for attachment to the hub (100) and/or rim.

7. Spoke (10) according to any one of the previous claims, wherein said at least one discontinuity comprises at least one projection (70).

8. Spoke (10) according to claim 7, wherein said at least one projection (70) is integrally formed on said surface of revolution (310, 320).

9. Spoke (10) according to claim 7, wherein said at least one projection (70) is defined on an element distinct from and associated with said surface of revolution (310, 320).

10. Spoke (10) according to any one of claims 1 to 6, wherein said at least one discontinuity comprises at least one recess (75).

11. Spoke (10) according to any one of claims 1 to 6, wherein said at least one discontinuity is defined by a substantially flat surface (311).

12. Spoke (10) according to any one of the previous claims, wherein said at least one discontinuity (70, 75, 311) extends along a direction substantially perpendicular to said longitudinal axis (X-X).

13. Spoke (10) according to claim 12, wherein said at least one discontinuity (70, 75, 311) extends along said direction (z).

14. Spoke (10) according to claim 12, wherein said at least one discontinuity (70, 75, 311) extends along a direction (y) substantially perpendicular to said direction (z).

15. Spoke (10) according to claim 13 or 14, wherein said at least one discontinuity (70, 75, 311) extends symmetrically with respect to a plane passing through said longitudinal axis (X-X).

16. Spoke (10) according to any one of the previous claims, wherein said at least one discontinuity (70, 75, 311) extends from said at least one of said first and second end portions (30, 40) along a direction parallel to said longitudinal axis (X-X).

17. Spoke (10) according to any one of the previous claims, wherein said surface of revolution (310, 320) comprises at least two discontinuities (70, 75, 311).

18. Spoke (10) according to claim 17, wherein said surface of revolution (310, 320) comprises four discontinuities (70, 75, 311).

19. Spoke (10) according to claim 17 or 18, wherein said discontinuities (70, 75, 311) extend symmetrically with respect to said longitudinal axis (X-X).

20. Spoke (10) according to any one of the previous claims, wherein said at least one discontinuity (70, 75, 311) comprises a curved outer surface (71).

21. Spoke (10) according to any one of the previous claims, wherein said surface of revolution (310, 320) is defined on said first end portion (30).

22. Spoke (10) according to any one of claims 1 to 20,
wherein said surface of revolution (310, 320) is defined on said second end portion (40).

23. Spoke (10) according to any one of claims 1 to 21, further comprising a bush (80) having an outer surface (81) for connection to the hub (100) and/or rim and an inner surface (85) for coupling with said at least one of said first and second end portions (30, 40), wherein said inner surface (85) is at least partially of a shape matching that of said surface of revolution (310, 320).

24. Spoke (10) according to claim 23, wherein said outer surface (81) comprises a threading (82).

25. Bicycle wheel, comprising:
- a hub (100);
- a rim;
- a plurality of spokes (10) extending between said hub (100) and said rim;
wherein the spokes (10) of said plurality of spokes comprise an elongated body (20) extending along a longitudinal axis (X-X), said elongated body (20) comprising:
- a first end portion (30) for attachment to a hub of a bicycle wheel;
- a second end portion (40) for attachment to a rim of a bicycle wheel;
- an intermediate portion (50) between said first and second end portions, wherein said intermediate portion (50) comprises a portion (60) flattened in a direction (z) perpendicular to said longitudinal axis (X-X);
wherein at least one of said first and second end portions (30, 40) comprises a surface of revolution (310, 320);
**characterised in that** said surface of revolution (310, 320) comprises at least one discontinuity (70, 75, 311).

26. Wheel according to claim 25, wherein at least one of said hub (100) and said rim comprises at least one coupling surface (85) with said at least one discontinuity (7.0, 75, 311).

27. Wheel according to claim 24 or 25, wherein said coupling surface (85) is at least partially of a shape matching that of said at least one discontinuity (70, 75, 311).

28. Spoke (10) for a bicycle wheel, comprising an elongated body (20) extending along a longitudinal axis X-X, said spoke (10) comprising:
- a first end portion (30) for attachment to a hub (100) of a bicycle wheel;
- a second end portion (40) for attachment to a rim of a bicycle wheel;
- an intermediate portion (50) between said first and second end portions, wherein said intermediate portion (50) comprises a portion (60) flattened in a direction (z) perpendicular to said longitudinal axis (X-X);
wherein at least one between said first and second end portions (30, 40) comprises a surface of revolution (310, 320);
**characterised in that** said surface of revolution (310, 320) comprises at least one discontinuity (70, 75, 311).

29. Spoke (10) according to claim 28, wherein said surface of revolution (310, 320) is defined on an element distinct from said elongated body (20) and associated with said elongated body (20) at at least one of said first and second end portions (30, 40).
